# NOUVEAU FASCICULE DE BREVET EUROPEEN

(11) **EP 0 650 306 B2**
(45) Date de publication et mention de la décision concernant l'opposition: **26.12.2007**
(45) Mention de la délivrance du brevet: 12.07.2000
(21) Numéro de dépôt: 94402390.2
(22) Date de dépôt: 24.10.1994
(51) Int. Cl.: H04Q 7/32, H04Q 7/22

(54) **Indication du type du message pour la conservation de la batterie dans un récepteur mobile, cellulaire**
Mitteilungstypanzeige zum Batteriesparen in einem mobilen Zellularfunkempfänger
Message type indication for battery saving in mobile cellular receiver

(30) Priorité: 26.10.1993 FR 9312741
(43) Date de publication de la demande: 26.04.1995
(73) Titulaire: Alcatel Lucent, 75008 Paris (FR)
(72) Inventeur: Desorbay, Eric, F-75011 Paris (FR); Roberts, Michael, F-92300 Levallois Perret (FR)
(74) Mandataire: Hedarchet, Stéphane

(56) Documents cités:
- EP-A- 0 536 099
- GB-A- 2 114 343
- La spécification technique "DIDON-ANTIOPE", 1984
- La norme GSM 04 08

## Description

La présente invention concerne des procédés de signalisation et de commande utilisés dans un système de radiocommunications, ainsi qu'une station de base et une station mobile pour la mise en oeuvre de ces procédés.

Dans la plupart des systèmes de radiocommunications cellulaires connus, il existe un canal, appelé canal de diffusion cellulaire (CBCH, pour Cell Broadcast CHannel dans la terminologie GSM), spécifique à chaque cellule, et destiné à la diffusion de messages d'information en général courts à destination de stations mobiles évoluant dans la cellule considérée. Les informations ainsi diffusées sont relatives notamment à la circulation routière ou à la météorologie, ou peuvent contenir des messages de publicité. Pour des raisons de clarté, ce canal (ou des canaux équivalents dans d'autres systèmes) sera dénommé canal d'information dans tout ce qui suit.

Ces informations sont mises à la disposition de l'utilisateur d'une station mobile (par exemple un radiotéléphone) sous forme d'un message de texte affiché sur l'écran du radiotéléphone, ou bien sous forme d'un message vocal lorsque leur canal de diffusion est un canal vocal.

Pour recevoir ces informations, une station mobile doit "écouter" le canal d'information, c'est-à-dire être active en réception sur ce canal. Or il peut arriver à certains moments qu'aucun message d'information ne soit diffusé sur le canal d'information. Ceci peut être dû par exemple au fait qu'il n'y a aucune nouvelle information à diffuser.

Les stations mobiles, de leur côté, ne peuvent pas savoir qu'aucune information ne sera diffusée à tel ou tel instant, de sorte qu'elles sont en permanence actives en réception sur le canal d'information et donc parfois inutilement. Il en est de même lorsque certaines des informations diffusées n'intéressent pas l'utilisateur d'une station mobile

Pour un radiotéléphone portatif notamment, le fait d'avoir à écouter en permanence un canal qui peut ne contenir aucune information, ou éventuellement aucune information intéressante pour son utilisateur, entraîne une consommation importante d'énergie. Or on sait qu'un souci constant est de diminuer la consommation des radiotéléphones, afin de conférer à leurs batteries une autonomie aussi importante que possible.

La présente invention a donc pour but de mettre au point un procédé de signalisation permettant d'éviter aux stations mobiles d'écouter le canal d'information lorsque cela n'est pas nécessaire, ainsi qu'un procédé de commande adapté des stations mobiles utilisant les informations communiquées dans la signalisation de ce procédé de signalisation.

La présente invention propose à cet effet un procédé de signalisation à destination de stations mobiles appartenant à un système de radiocommunications utilisant notamment :
- un canal d'information destiné à être reçu par une ou plusieurs desdites stations mobiles et sur lequel sont émis des messages dits d'information contenant des informations utiles pour lesdites stations mobiles,
- un canal de signalisation sur lequel lesdites stations mobiles sont en permanence actives en réception et sur lequel sont émis notamment des messages dits de signalisation,
caractérisé en ce qu'il consiste, avant l'émission d'un message d'information sur ledit canal d'information, à émettre un message, dit d'indication, sur ledit canal de signalisation pour indiquer auxdites stations mobiles le type du prochain message d'information qui sera émis.

Selon le procédé de l'invention, on utilise un canal sur lequel les stations mobiles doivent en permanence être actives en réception pour indiquer à ces dernières le type de prochain message diffusé sur le canal d'information.

Par conséquent, ce procédé n'entraîne pas de consommation supplémentaire d'énergie au sein des stations mobiles puisque ces dernières doivent "écouter" en permanence le canal de signalisation ; en outre, le procédé selon l'invention assure une utilisation plus optimale des ressources ; enfin, il permet aux stations mobiles de choisir selon certains critères (choisis par l'utilisateur ou prédéterminés) les informations à écouter, ce qui permet d'économiser l'énergie disponible aux niveaux des stations mobiles, et donc d'accroître leur autonomie.

Selon un mode de réalisation avantageux, le message d'indication utilisé peut être contenu soit dans un message de remplissage émis sur le canal de signalisation lorsqu'aucun message de signalisation n'est émis à destination des stations mobiles, soit dans un message de signalisation contenant des informations utiles et dans lequel des bits restent disponibles, ces derniers contenant alors le message d'indication.

On tire ainsi profit des ressources inutilisées sur le canal de signalisation pour transmettre les messages d'indication.

Dans une application particulière du procédé selon l'invention, le système de radiocommunications est un système cellulaire numérique utilisant le principe de l'accès multiple à répartition dans le temps ; le canal d'information est un intervalle de temps répété selon un cycle prédéterminé, et le canal de signalisation est un intervalle de temps également répété selon un cycle prédéterminé, de sorte qu'un intervalle de temps du canal de signalisation précède toujours dans le temps un intervalle de temps du canal d'information.

Dans l'application particulière précédente, le canal de signalisation peut être un canal de recherche sur lequel sont émis à destination des stations mobiles soit des messages de signalisation, dits messages de recherche, destinés à les avertir qu'un abonné fixe ou mobile cherche à les joindre, soit des messages de remplissage.

Le procédé selon l'invention peut par exemple permettre d'indiquer trois types de messages d'information :
- des messages d'un premier type, dits messages d'information ordinaires, contenant des informations générales à destination des stations mobiles,
- des messages d'un deuxième type, dits messages d'urgence, contenant des informations à communiquer d'urgence aux stations mobiles,
- des messages d'un troisième type, dits messages de remplissage émis lorsqu'aucun message d'information ordinaire ou aucun message d'urgence n'est à émettre.

Un procédé de commande d'une station mobile d'un système de radiocommunications utilisant un procédé de signalisation tel que décrit ci-dessus consiste, après réception d'un message d'indication avertissant de l'émission sur le canal d'information d'un message d'information, à commander l'activation ou la désactivation de la station mobile en réception sur le canal d'information en fonction du type du message d'information.

Notamment, un tel procédé consiste, après réception d'un message d'indication avertissant de l'émission sur le canal d'information d'un message des deuxième ou troisième types, à commander respectivement l'activation ou la désactivation de la station mobile en réception sur le canal d'information.

En outre, il peut consister, après réception d'un message d'indication avertissant de l'émission sur le canal d'information d'un message du premier type, à activer ladite station mobile en réception sur le canal d'information. Lorsque le message d'indication indique en outre la catégorie du message d'information du premier type, le procédé peut consister à n'activer la station mobile en réception sur le canal d'information que si la catégorie correspond à une catégorie préalablement sélectionnée.

La présente invention concerne également une station de base pour la mise en oeuvre du procédé selon l'invention, comprenant notamment :
- des moyens d'émission de signaux radio, notamment pour émettre sous forme de signaux radio les messages d'information et les messages de signalisation,
- des moyens de commande pour commander les moyens d'émission pour qu'ils émettent sous forme de signaux radio les messages d'indication adaptés au type du prochain message d'information qu'il vont émettre.

Enfin, la présente invention concerne une station mobile pour la mise en oeuvre du procédé selon l'invention, comprenant :
- des moyens de réception de signaux radio,
- des moyens de traitement des signaux radio reçus, et notamment des messages d'indication,
- des moyens de commande de l'activation ou la désactivation des moyens de réception sur le canal d'information en fonction du type du prochain message d'information.

Cette station mobile peut comprendre en outre des moyens de sélection par son utilisateur d'une option d'activation des moyens de réception en fonction du type du message d'information indiqué.

D'autres caractéristiques et avantages de la présente invention apparaîtront dans la description suivante d'un mode de réalisation de la présente invention, donné à titre illustratif et nullement limitatif.

Dans les figures suivantes :
- la figure 1 montre l'organisation des différents canaux de transmission de données dans le sens station de base d'un système numérique de radiocommunications vers une station mobile de ce système,
- la figure 2 représente schématiquement une station de base pour la mise en oeuvre du procédé selon la présente invention, avec les éléments de cette dernière intervenant dans la présente invention.
- la figure 3 représente schématiquement une station mobile pour la mise en oeuvre du procédé selon la présente invention, avec les éléments de cette dernière intervenant dans la présente invention.

Dans toutes ces figures, les éléments communs portent les mêmes numéros de référence.

La description qui suit se référera particulièrement à un système cellulaire de radiocommunications numériques conforme à la norme GSM. Il est toutefois bien entendu que cette application particulière est donnée uniquement à titre d'exemple, et que l'invention s'applique tout aussi bien à d'autres systèmes de radiocommunications.

Dans les systèmes conformes à la norme GSM, le canal d'information n'existe que lorsque les stations mobiles se trouvent en mode veille, c'est-à-dire schématiquement lorsqu'elles ne sont pas en communication avec un autre abonné, fixe ou mobile.

La transmission des données étant régie par la principe de l'accès multiple à répartition dans le temps (AMRT), les données transmises sont organisées en trames ou en multitrames, chaque canal étant constitué d'un ou de plusieurs intervalles de temps au sein d'une multitrame, répétés selon un cycle prédéterminé au cours du temps.

Plus précisément, dans le cas d'une cellule ordinaire de faible capacité, les données transmises par la station de base aux stations mobiles en mode veille sont organisées en multitrames comprenant chacune 51 trames, chaque trame comportant huit intervalles de temps.

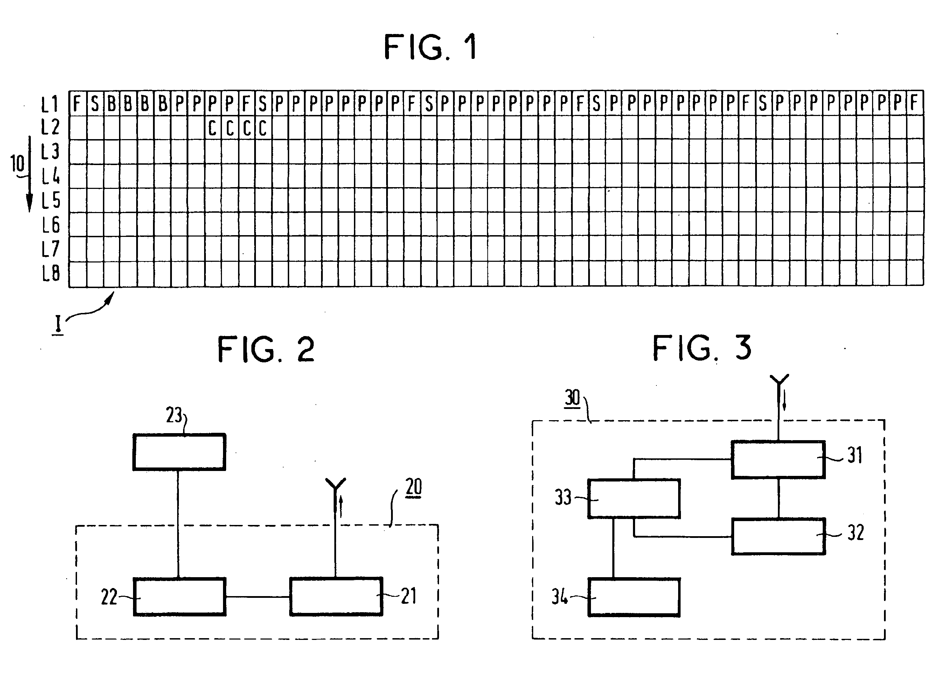

En figure 1, on a représenté une multitrame à 51 trames sous la forme d'un tableau T à huit lignes L1 à L8 et 51 colonnes.

Les premiers intervalles de temps de chacune des 51 trames sont représentés côte à côte sur la première ligne L1, les deuxièmes intervalles de temps de chacune des 51 trames sont représentés côte à côte sur la seconde ligne L2, et ainsi de suite. Le temps s'écoule en parcourant le tableau T colonne après colonne, dans le sens de la flèche 10.

Dans le sens station de base vers station mobile, le premier intervalle de temps, dénommé IT0, de chaque trame est réservé de manière bien connue à la signalisation à destination des stations mobiles.

Plus précisément, les deux premiers IT0 de la ligne L1 sont réservés respectivement au sous-canal de contrôle de fréquence F et au sous-canal de synchronisation S. Ceci signifie que le sous-canal F est constitué d'un intervalle de temps répété, comme le montre la figure 1, toutes les 10 trames.

Les quatre IT0 suivants sont réservés au canal de signalisation commun B (ce canal est appelé voie balise ou BCCH pour Broadcast Control Channel, dans la terminologie GSM), et les quatre IT0 qui suivent, ainsi que tous les autres IT0 non réservés aux sous-canaux F ou S, sont consacrés au sous-canal de recherche P (également dénommé canal de paging) ; le sous-canal de recherche P est un canal de signalisation destiné notamment à avertir une station mobile qu'un autre abonné, mobile ou fixe, cherche à la joindre. Lorsque cela est effectivement le cas, certains des intervalles de temps du sous-canal de recherche P sont remplacés par des intervalles de temps d'un sous-canal d'allocation (non représenté) pour allouer à la station mobile un canal de trafic pour les échanges de données de parole par exemple. Après l'allocation d'un canal de trafic à une station mobile, celle-ci passe en mode dédié, de sorte que les canaux P et C ne sont plus utilisés pour cette station mobile.

On voit sur la ligne L2 que le canal d'information (CBCH), noté C, est constitué, dans la configuration présentée à titre d'exemple de quatre intervalles de temps IT1 (c'est-à-dire 4 quatre "deuxièmes" intervalles de temps) par multitrame, ces intervalles de temps suivant immédiatement respectivement deux intervalles de temps du sous-canal de recherche P, un intervalle de temps du sous-canal F et un intervalle de temps du sous-canal S.

Dans le cas général, les intervalles de temps utilisés pour le canal C peuvent changer d'une cellule à l'autre ; leurs rangs dans la multitrame à 51 sont indiqués aux stations mobiles d'une cellule donnée dans la signalisation transmise sur le canal B (on rappelle ici que les stations mobiles sont synchronisées à ce stade avec la station de base, de sorte qu'elles connaissent exactement l'organisation des trames de données dans la multitrame à 51 et que la simple indication du rang d'un intervalle de temps dans cette multitrame leur permet de connaître exactement la position temporelle de ce canal).

On ne décrira pas ici plus en détails l'affectation des autres intervalles de temps de la multitrame à 51, cette description n'étant pas utile pour la suite de l'exposé de l'invention. On pourra se reporter éventuellement, pour plus d'explications sur le rôle et l'organisation des différents canaux, à l'ouvrage intitulé :" The GSM System for Mobile Communications" de M. MOULY et M.B. PAUTET, pages 206 à 212.

Le réseau de gestion du système de radiocommunications considéré émet en permanence des messages de signalisation sur le sous-canal de recherche P. Chaque message s'adresse à un groupe de stations mobiles se trouvant dans la cellule correspondante. Ces messages de signalisation, dits messages de recherche, sont différents selon les groupes de stations mobiles auxquels ils s'adressent dans la cellule.

Lorsque l'une des stations mobiles d'un groupe doit établir une communication, un message de signalisation est émis à destination du groupe auquel appartient cette station mobile ; il est reçu par toutes les stations mobiles du groupe mais est destiné à l'une d'entre elles seulement.

Lorsqu'aucune des stations mobiles de ce groupe ne doit établir de communication, un message de remplissage est émis. Ce message n'a aucune signification, mais permet d'émettre en permanence sur le sous-canal de recherche P ; comme cela a par ailleurs déjà été précisé, les stations mobiles sont en permanence actives en réception sur ce canal, afin de pouvoir être averties dès qu'une communication doit être établie.

Comme on l'a déjà vu, sur le canal d'information sont émis par le réseau des messages d'information, relatifs par exemple à la circulation routière, à la météorologie, etc... Lorsqu'il n'y a aucun message d'information à émettre, des messages de remplissage sont émis.

Selon l'invention, pour éviter aux stations mobiles d'avoir à être actives en réception en permanence sur le canal C, on leur indique le type du ou des prochains messages d'information par l'intermédiaire d'un message dit d'indication transmis sur le sous-canal de recherche P.

On peut par exemple classer les messages d'information selon trois types de messages :
- des messages d'un premier type, appelés messages d'information ordinaires, contiennent des informations générales à destination des stations mobiles,
- des messages d'un deuxième type, appelés messages d'urgence, contiennent des informations à communiquer d'urgence aux stations mobiles,
- des messages d'un troisième type, appelés messages de remplissage, émis lorsqu'aucun message des premier et deuxième types n'est à émettre.

Après avoir traité le message d'indication reçu et selon un premier mode de fonctionnement possible, chaque station mobile peut décider d'écouter ou de ne pas écouter le ou les prochains messages d'information.

Selon un perfectionnement du procédé précédent, on peut conférer au message d'indication des fonctions de message de commande, c'est-à-dire faire en sorte qu'il soit automatiquement suivi d'une action au niveau de la station mobile réceptrice en fonction de la configuration donnée à cette dernière par son utilisateur, ou d'une configuration préétablie au niveau de son logiciel de pilotage.

Ainsi, selon un deuxième mode de fonctionnement possible, on peut concevoir ce logiciel de pilotage de sorte que, lorsqu'un message d'indication avertit de l'émission sur le canal d'information d'un message des deuxième ou troisième types, il commande automatiquement respectivement l'activation ou la désactivation de la station mobile en réception sur le canal d'information.

Selon ce mode de fonctionnement, on peut également prévoir que lorsqu'un message d'indication avertit de l'émission sur le canal d'information d'un message du premier type, le logiciel laisse le choix à la station mobile, par exemple en fonction d'une option sélectionnée par son utilisateur, soit d'écouter le message d'information suivant quel qu'il soit, soit de ne l'écouter que s'il appartient à une catégorie intéressant l'utilisateur (publicité, météo, circulation routière, les catégories "intéressantes" ayant été au préalable sélectionnées par l'utilisateur à l'aide de moyens d'interface adaptés).

L'utilisation du sous-canal de recherche P pour transmettre les messages d'indication est particulièrement avantageuse.

En effet, en premier lieu, les intervalles de temps réservés au sous-canal de recherche P dans la multitrame à 51 sont nombreux (voir figure 1), de sorte qu'ils sont répétés avec une récurrence supérieure à celle des intervalles de temps correspondant au canal d'information C, et toujours avant l'émission de ce dernier. Cela permet d'émettre les messages d'indication adaptés avant chaque émission sur le canal d'information C.

D'autre part, lorsqu'aucun message de recherche n'est à émettre sur le sous-canal de recherche P, au lieu d'émettre un message de remplissage, on peut utiliser les intervalles de temps correspondants pour émettre un message d'indication.

Enfin, lorsque des messages de recherche sont émis au moment où l'on souhaiterait émettre un message d'indication, cela ne pose pas non plus de problème car les messages de recherche n'utilisent pas tous les bits disponibles. Ces bits disponibles peuvent être utilisés à profit pour émettre les messages d'indication souhaités.

Par ailleurs, chaque message de recherche n'est en général adressé qu'à certaines stations mobiles du groupe concerné, de sorte que même si un message de recherche est émis, l'on peut utiliser ses bits disponibles à destination des stations mobiles qui ne sont pas concernées par son contenu.

Pour la mise en oeuvre du procédé selon l'invention, une station de base 20 d'un système de radiocommunications comprend (voir figure 2) :
- des moyens d'émission 21 de signaux radio pour émettre sous forme de signaux radio les messages d'information et les messages de signalisation, notamment les messages de recherche et les messages de remplissage associés,
- des moyens de commande 22 qui, sous le contrôle d'un organe 23 appartenant au réseau de gestion du système de radiocommunications considéré, sont programmés pour commander les moyens d'émission 21 pour qu'ils émettent sous forme de signaux radio les messages d'indication adaptés au type du prochain message d'information qu'il vont émettre.

En outre, pour la mise en oeuvre du procédé selon l'invention, une station mobile 30 comprend (voir figure 3):
- des moyens 31 de réception de signaux radio,
- des moyens 32 de traitement des signaux radio reçus, et notamment des messages d'indication,
- des moyens 33 pour commander l'activation ou la désactivation des moyens de réception 31 en fonction du type du prochain message d'information.

Les moyens 33, comportant par exemple un logiciel de pilotage, sont programmés conformément à l'un des modes de fonctionnement décrits.

Conformément à ces modes de fonctionnement, la station mobile 30 peut comprendre en outre des moyens 34 de sélection par l'utilisateur d'une part d'une option d'activation des moyens de réception 31 en fonction du type indiqué de chaque message d'information, et d'autre part de la catégorie des messages du premier type qu'il souhaite effectivement écouter.

Bien entendu, la présente invention n'est pas limitée au mode de réalisation qui vient d'être décrit.

En particulier, la description précédente concerne un système de radiocommunications conforme à la norme GSM, et comportant par conséquent une organisation de canaux prédéterminée et précise.

Toutefois, l'invention s'applique généralement à tout système de radiocommunications dans lequel un canal de diffusion de messages d'information n'est pas utilisé en permanence.

Il n'est pas nécessaire d'utiliser, pour émettre les messages d'indication, un canal de recherche (canal de paging), mais l'on peut utiliser tout canal de signalisation sur lequel les stations mobiles doivent être en permanence actives en réception et dans lequel il reste des ressources disponibles pour insérer les messages d'indication nécessaires.

Il est en outre préférable que ce canal ait une récurrence suffisante pour permettre d'avertir les stations mobiles avant l'émission de chaque message d'information, mais cela n'est pas une caractéristique nécessaire. En effet, il suffit de pouvoir émettre des messages d'indication suffisamment souvent, chaque message d'indication concernant alors un ou plusieurs messages d'information consécutifs à venir ; dans ce cas, on peut prévoir au sein des stations mobiles des moyens pour mettre en mémoire les informations contenues dans les messages d'indication, afin de les utiliser ultérieurement, lorsque cela sera nécessaire.

Ainsi, dans tout ce qui précède, lorsque l'on parle du prochain message d'information, il peut s'agir également du ou des prochains messages d'information.

Par ailleurs, on a décrit une procédure qui se déroule entièrement lorsque les stations mobiles sont en mode veille, car, du fait de la norme GSM, les canaux d'information C et de recherche P ne sont utilisés que dans ce mode. Toutefois, cela n'est pas une caractéristique essentielle de la présente invention, et cette dernière s'applique tout aussi bien à d'autres systèmes dans lesquels existent les canaux qui viennent d'être définis sans pour autant que ces canaux aient une utilisation réservée au mode veille.

Enfin, on pourra remplacer tout moyen par un moyen équivalent sans sortir du cadre de la présente invention.

## Revendications

1. Procédé de signalisation à destination de stations mobiles appartenant à un système cellulaire numérique de radiocommunications utilisant le principe de l'accès multiple à répartition dans le temps, ledit système utilisant notamment :
- un canal d'information destiné à être reçu par une ou plusieurs desdites stations mobiles et sur lequel sont émis des messages dits d'information contenant des informations utiles pour lesdites stations mobiles,
- un canal de signalisation sur lequel lesdites stations mobiles sont en permanence actives en réception et sur lequel sont émis notamment des messages dits de signalisation,
ledit canal d'information étant constitué d'un intervalle de temps également répété selon un cycle prédéterminé, et ledit canal de signalisation étant constitué d'un intervalle de temps également répété selon un cycle prédéterminé de sorte qu'un intervalle de temps dudit canal de signalisation précède toujours un intervalle de temps dudit canal d'information,
le procédé consistant, avant l'émission d'un message d'information sur ledit canal d'information, à émettre un message, dit d'indication, sur ledit canal de signalisation pour indiquer auxdites stations mobiles le type du prochain message d'information qui sera émis.

2. Procédé selon la revendication 1 **caractérisé en ce que** ledit message d'indication utilisé est contenu soit dans un message de remplissage émis sur ledit canal de signalisation lorsqu'aucun message de signalisation n'est émis à destination desdites stations mobiles, soit dans un message de signalisation contenant des informations utiles et dans lequel des bits restent disponibles, lesdits bits disponibles contenant alors ledit message d'indication.

3. Procédé selon l'une des revendications 1 ou 2 **caractérisé en ce que** ledit système de radiocommunications est un système cellulaire numérique utilisant le principe de l'accès multiple à répartition dans le temps, **en ce que** ledit canal d'information est constitué d'un intervalle de temps également répété selon un cycle prédéterminé, et **en ce que** ledit canal de signalisation est constitué d'un intervalle de temps également répété selon un cycle prédéterminé de sorte qu'un intervalle de temps dudit canal de signalisation précède toujours un intervalle de temps dudit canal d'information.

4. Procédé selon l'une des revendications 1 à 3 **caractérisé en ce que** ledit canal de signalisation est un canal de recherche sur lequel sont émis à destination desdites stations mobiles soit des messages de signalisation, dits messages de recherche, destinés à les avertir qu'un abonné fixe ou mobile cherche à les joindre, soit des messages de remplissage.

5. Procédé selon l'une des revendications 1 ou 4 **caractérisé en ce qu'**il permet d'indiquer trois types de messages d'information :
- des messages d'information d'un premier type, dits messages d'information ordinaires, contenant des informations générales à destination desdites stations mobiles,
- des messages d'un deuxième type, dits messages d'urgence, contenant des informations à communiquer d'urgence auxdites stations mobiles,
- des messages d'un troisième type, dits messages de remplissage, émis lorsqu'aucun message d'information des premier ou deuxième types n'est à émettre.

6. Procédé de commande d'une station mobile d'un système cellulaire numérique de radiocommunications utilisant un procédé selon l'une des revendications 1 à 5, ledit système utilisant le principe de l'accès multiple à répartition dans le temps, le procédé de commande consistant, après réception d'un message d'indication avertissant de l'émission sur ledit canal d'information d'un message d'information d'un certain type, à commander l'activation ou la désactivation de ladite station mobile en réception sur ledit canal d'information en fonction du type dudit message d'information, ledit canal d'information étant constitué d'un intervalle de temps également répété selon un cycle prédéterminé, et ledit canal de signalisation étant constitué d'un intervalle de temps également répété selon un cycle prédéterminé de sorte qu'un intervalle de temps dudit canal de signalisation précède toujours un intervalle de temps dudit canal d'information.

7. Procédé de commande d'une station mobile d'un système cellulaire numérique de radiocommuncations utilisant un procédé selon la revendication 5,ledit système utilisant le principe de l'accès multiple à répartition dans le temps, le procédé de commande consistant, après réception d'un message d'indication avertissant de l'émission sur ledit canal d'information d'un message desdits deuxième ou troisème types, à commander respectivement l'activation ou la désativation de ladite station mobile en réception sur ledit canal d'information, ledit canal d'information étant constitué d'un intervalle de temps également répété selon un cycle prédéterminé, et ledit canal de signalisation étant constitué d'un intervalle de temps également répété selon un cycle prédéterminé de sorte qu'un intervalle de temps dudit canal de signalisation précède toujours un intervalle de temps dudit canal d'information.

8. Procédé selon la revendication 7 **caractérisé en ce qu'**il consiste, après réception d'un message d'indication avertissant de l'émission sur ledit canal d'information d'un message dudit premier type, à activer ladite station mobile en récpetion sur ledit canal d'information.

9. Procédé selon la revendication 7 **caractérisé en ce qu'**il consiste, après réception d'un message d'indication avertissant de l'émission sur ledit canal d'information d'un message dudit premier type indiquant en outre la catégorie dudit message du premier type, à n'activer ladite station mobile en réception sur ledit canal d'information que si ladite catégorie correspond à une catégorie préalablement sélectionnée.

10. Station de base, pour la mise en oeuvre des procédés selon l'une des revendications 1 à 9, appartenant à un système cellulaire numérique de radiocommunications utilisant le principe de l'accès multiple à répartition dans le temps, ledit système utilisant notamment :
- un canal d'information destiné à être reçu par une ou plusieurs stations mobiles et sur lequel sont émis des messages dits d'information contenant des informations utiles pour lesdites stations mobiles,
- un canal de signalisation sur lequel lesdites stations mobiles sont en permanence actives en réception et sur lequel sont émis notamment des messages dits de signalisation, la station de base comprend notamment :
- des moyens d'émission de signaux radio, notamment pour émettre sous forme de signaux radio lesdits messages d'information sur ledit canal d'information et lesdits messages de signalisation sur ledit canal de signalisation,
- des moyens de commande pour commander lesdits moyens d'émission pour qu'ils émettent sous forme de signaux radio, avant l'émission d'un message d'information, un message d'indication sur ledit canal de signalisation pour indiquer auxdites stations mobiles le type du prochain message d'information qui sera émis
ledit canal d'information étant constitué d'un intervalle de temps également répété selon un cycle prédéterminé, et ledit canal de signalisation étant constitué d'un intervalle de temps également répété selon un cycle prédéterminé de sorte qu'un intervalle de temps dudit canal de signalisation précède toujours un intervalle de temps dudit canal d'information.

11. Station mobile, pour la mise en oeuvre des procédés selon l'une des revendications 1 à 9, appartenant à un sytème cellulaire numérique de radiocommunications utilisant le principe de l'accès multiple à répartition dans le temps, ledit système utilisant notamment :
- un canal d'information destiné à être reçu par une ou plusieurs stations mobiles et sur lequel sont émis des messages dits d'information contenant des informations utiles pour lesdites stations mobiles,
- un canal de signalisation sur lequel lesdites stations mobiles sont en permanence actives en récpetion et sur lequel sont émis notamment des messages dits de signalisation, ladite station mobile comprend :
- des moyens de réception de signaux radio,
- des moyens de traitement des signaux radio reçus, et notamment de messages d'indication avertissant de l'émission sur ledit canal d'information d'un message d'information d'un certain type,
- des moyens de commande d'activation ou de désactivation desdits moyens de réception sur ledit canal d'information en fonction du type dudit prochain message d'information
, ledit canal d'information étant constitué d'un intervalle de temps également répété selon un cycle prédéterminé, et ledit canal de signalisation étant constitué d'un intervalle de temps également répété selon un cycle prédéterminé de sorte qu'un intervalle de temps dudit canal de signalisation précède toujours un intervalle de temps dudit canal d'information.

12. Station mobile selon la revendication 11, **caractérisée en ce qu'**elle comprend en outre des moyens de sélection par son utilisateur d'une option d'activation desdits moyens de réception en fonction du type du message d'information indiqué.

## Claims

1. Signalling method for mobile stations belonging to a cellular digital radio communication system using the time-division multiple access principle, said system using in particular:
- an information channel intended to be received by one or more of said mobile stations and on which information messages containing information useful to said mobile stations are transmitted, and
- a signalling channel on which said mobile stations are continuously actively receiving and on which signalling messages in particular are transmitted,
said information channel being constituted by a time slot repeated in accordance with a predetermined cycle, and said signalling channel being constituted by a time slot repeated in accordance with a predetermined cycle so that a time slot of said signalling channel always precedes a time slot of said information channel,
in which method, prior to transmission of an information message on said information channel, an indication message is transmitted on said signalling channel to indicate to said mobile stations the type of the next information message that will be transmitted.

2. Method according to claim 1, **characterised in that** said indication message is contained either in a filler message transmitted on said signalling channel when there is no signalling message to be transmitted to said mobile stations or in a signalling message containing useful information and in which there are available bits, said available bits then containing said indication message.

3. Method according to either claim 1 or claim 2, **characterised in that** said cellular digital radio communication system is a digital cellular system using the time-division multiple access principle, **in that** said information channel is constituted by a time slot repeated in accordance with a predetermined cycle, and **in that** said signalling channel is constituted by a time slot repeated in accordance with a predetermined cycle so that a time slot of said signalling channel always precedes a time slot of said information channel.

4. Method according to any of claims 1 to 3, **characterised in that** said signalling channel is a paging channel on which are transmitted to said mobile stations either signalling messages, referred to as paging messages, to advise them that a fixed or mobile user is seeking to contact them, or filler messages.

5. Method according to either claim 1 or claim 4, **characterised in that** it is used to indicate three types of information message:
- information messages of a first type, referred to as ordinary information messages, containing general information addressed to said mobile stations,
- messages of a second type, referred to as urgent messages, containing information to be communicated urgently to said mobile stations, and
- messages of a third type, referred to as filler messages, transmitted when there is no information message of the first or second type to be transmitted.

6. Method of controlling a mobile station of a cellular digital radio communication system using a method according to any of claims 1 to 5, said system using the time-division multiple access principle, in which control method activation or deactivation of said mobile station receiving on said information channel is commanded according to the type of said information message after an indication message is received advising transmission on said information channel of an information message of a certain type, said information channel being constituted by a time slot repeated in accordance with a predetermined cycle, and said signalling channel being constituted by a time slot repeated in accordance with a predetermined cycle so that a time slot of said signalling channel always precedes a time slot of said information channel.

7. Method of controlling a mobile station of a cellular digital radio communication system using a method according to claim 5, said system using the time-division multiple access principle, in which control method activation or deactivation, respectively, of said mobile station receiving on said information channel is commanded after receiving an indication message advising the transmission on said information channel of a message of said second or third type, said information channel being constituted by a time slot repeated in accordance with a predetermined cycle, and said signalling channel being constituted by a time slot repeated in accordance with a predetermined cycle so that a time slot of said signalling channel always precedes a time slot of said information channel.

8. Method according to claim 7, **characterised in that** said mobile station receiving said information channel is activated after receiving an indication message advising the transmission on said information channel of a message of said first type.

9. Method according to claim 7 **characterised in that**, after receiving an indication message advising transmission on said information channel of a message of said first type also indicating the category of said message of the first type, said mobile station receiving said information channel is activated only if said category corresponds to a previously selected category.

10. Base station for implementing methods according to any of claims 1 to 9 and belonging to a cellular digital radio communication system using the time division multiple access principle, said system using in particular:
- an information channel intended to be received by one or more mobile stations and on which are transmitted information messages containing information useful to said mobile stations, and
- a signalling channel which said mobile stations continuously actively receive and on which signalling messages in particular are transmitted, the base station in particular includes:
- means for transmitting radio signals, in particular for transmitting in the form of radio signals said information messages on said information channel and said signalling messages on said signalling channel,
- control means for commanding said transmitter means, before transmitting an information message, to transmit in the form of radio signals on said signalling channel an indication message to indicate to said mobile stations the type of the next information message that will be transmitted, and
said information channel being constituted by a time slot repeated in accordance with a predetermined cycle, and said signalling channel being constituted by a time slot repeated in accordance with a predetermined cycle so that a time slot of said signalling channel always precedes a time slot of said information channel.

11. Mobile station for implementing methods according to any of claims 1 to 9 and belonging to a cellular digital radio communication system using the time-division multiple access principle, said system using in particular:
- an information channel intended to be received by one or more mobile stations and on which are transmitted information messages containing information useful to said mobile stations, and
- a signalling channel on which said mobile stations continuously actively receive and on which signalling messages in particular are transmitted, said mobile station includes:
- means for receiving radio signals,
- means for processing received radio signals, and in particular indication messages advising transmission on said information channel of an information message of a particular type, and
- means for commanding activation or deactivation of said receiver means on said information channel according to the type of said next information message, and
said information channel being constituted by a time slot repeated in accordance with a predetermined cycle, and said signalling channel being constituted by a time slot repeated in accordance with a predetermined cycle so that a time slot of said signalling channel always precedes a time slot of said information channel.

12. Mobile station according to claim 11, **characterised in that** it further includes selection means for the user to select an option for activation of said receiver means according to the indicated information message type.

## Patentansprüche

1. Signalisierungsverfahren, das an Mobilstationen gerichtet ist, welche zu einem digitalen zellularen Funkkommunikationssystem gehören, welches das Prinzip des Mehrfachzugriffs im Zeitmultiplex verwendet, wobei bei diesem System hauptsächlich folgendes eingesetzt wird:
- ein Informationskanal, der von einer oder mehreren dieser Mobilstationen empfangen werden soll und auf dem so genannte Informationsmitteilungen gesendet werden, die für diese Mobilstationen nützliche Informationen enthalten,
- ein Signalisierungskanal, auf dem diese Mobilstationen ständig empfangsaktiv sind und auf dem insbesondere so genannte Signalisierungsmitteilungen gesendet werden,
wobei dieser Informationskanal aus einem Zeitschlitz besteht, der ebenfalls gemäß einem festgelegten Zyklus wiederholt wird, und dieser Signalisierungskanal aus einem Zeitschlitz besteht, der ebenfalls gemäß einem festgelegten Zyklus wiederholt wird, so dass einem Zeitschlitz dieses Informationskanals stets ein Zeitschlitz dieses Signalisierungskanals vorausgeht,
wobei das Verfahren darin besteht, vor dem Senden einer Informationsmitteilung auf diesem Informationskanal eine so genannte Anzeigemitteilung auf diesem Signalisierungskanal zu senden, um diesen Mohilstationen den Typ der nächsten Informationsmitteilung, die gesendet werden wird, anzuzeigen.

2. Verfahren gemäß Anspruch 1, **dadurch gekennzeichnet, dass** diese Anzeigemitteilung, die verwendet wird, entweder in einer Füllmitteilung enthalten ist, die auf diesem Signalisierungskanal gesendet wird, wenn keine Signalisierungsmitteilung für diese Mobilstationen gesendet wird, oder in einer nützliche Informationen enthaltenden Signalisierungsmitteilung, in der Bits verfügbar bleiben, wobei diese verfügbaren Bits dann diese Anzeigemitteilung enthalten.

3. Verfahren gemäß einem der Ansprüche 1 oder 2, **dadurch gekennzeichnet, dass** dieses Funkkommunikationssystem ein digitales zellulares System ist, welches das Prinzip des Mehrfachzugriffs im Zeitmultiplex verwendet, **dadurch gekennzeichnet, dass** dieser Informationskanal aus einem Zeitschlitz besteht, der ebenfalls gemäß einem festgelegten Zyklus wiederholt wird, und **dadurch gekennzeichnet, dass** dieser Signalisierungskanal aus einem Zeitschlitz besteht, der ebenfalls gemäß einem festgelegten Zyklus wiederholt wird, so dass einem Zeitschlitz dieses Informationskanals stets ein Zeitschlitz dieses Signalisierungskanals vorausgeht.

4. Verfahren gemäß einem der Anspruche 1 bis 3, **dadurch gekennzeichnet, dass** dieser Signalisierungskanal ein Suchkanal ist, auf dem an diese Mobilstationen gerichtet entweder Signalisierungsmitteilungen, so genannte Suchmitteilungen, gesendet werden, die sie davon unterrichten sollen, dass ein Festnetzteilnehmer oder ein Mobilteilnehmer sie zu erreichen versucht, oder Füllmitteilungen.

5. Verfahren gemäß Anspruch 1 oder 4, **dadurch gekennzeichnet, dass** es die Anzeige von drei Informationsmitteilungstypen ermöglicht:
- Informationsmitteilungen eines ersten Typs, so genannte gewöhnliche Informationsmitteilungen, die allgemeine Informationen für diese Mobilstationen enthalten,
- Mitteilungen eines zweiten Typs, so genannte dringende Mitteilungen, die Informationen enthalten, die dringend den Mobilstationen mitzuteilen sind,
- Mitteilungen eines dritten Typs, so genannte Füllmitteilungen, die gesendet werden, wenn keinerlei Informationsmitteilung des ersten oder zweien Typs gesendet werden muss.

6. Verfahren zur Steuerung einer Mobilstation eines digitalen zellularen Funkverkehrsystems, das ein Verfahren gemäß einem der Ansprüche 1 bis 5 einsetzt, wobei dieses System das Prinzip des Mehrfachzugriffs im Zeitmultiplex verwendet, und das Verfahren zur Steuerung darin besteht, nach dem Empfang einer Anzeigemitteilung, die über das Senden einer Informationsmitteilung eines bestimmten Typs auf diesem Informationskanal in Kenntnis setzt, die Aktivierung oder Inaktivierung dieser Mobilstation auf Empfang auf diesem Informationskanal in Abhängigkeit vom Typ dieser Informationsmitteilung zu steuern, wobei dieser Informationskanal aus einem Zeitschlitz besteht, der ebenfalls gemäß einem festgelegten Zyklus wiederholt wird, und dieser Signalisierungskanal aus einem Zeitschlitz besteht, der ebenfalls gemäß einem festgelegten Zyklus wiederholt wird, so dass einem Zeitschlitz dieses Informationskanals stets ein Zeitschlitz dieses Signalisierungskanals vorausgeht.

7. Verfahren zur Steuerung einer Mobilstation eines digitalen zellularen Funkkommunikationssystems, das ein Verfahren gemäß Anspruch 5 einsetzt, wobei dieses System das Prinzip des Mehrfachzugriffs im Zeitmultiplex verwendet, und das Verfahren zur Steuerung darin besteht, nach dem Empfang einer Anzeigemitteilung, die über das Senden einer Mitteilung dieses zweiten oder dritten Typs auf diesem Informationskanal in Kenntnis setzt, die Aktivierung beziehungsweise Inaktivierung dieser Mobilstation auf Empfang auf diesem Informationskanal zu steuern, wobei dieser Informationskanal aus einem Zeitschlitz besteht, der ebenfalls gemäß einem festgelegten Zyklus wiederholt wird, und dieser Signalisierungskanal aus einem Zeitschlitz besteht, der ebenfalls gemäß einem festgelegten Zyklus wiederholt wird, so dass einem Zeitschlitz dieses Informationskanals stets ein Zeitschlitz dieses Signalisierungskanals vorausgeht.

8. Verfahren gemäß Anspruch 7, **dadurch gekennzeichnet, dass** es darin besteht, nach dem Empfang einer Anzeigemitteilung, die über das Senden einer Mitteilung dieses ersten Typs auf diesem Informationskanal in Kenntnis setzt, diese Mobilstation auf Empfang auf diesem Informationskanal zu aktivieren.

9. Verfahren gemäß Anspruch 7, **dadurch gekennzeichnet, dass** es darin besteht, nach dem Empfang einer Anzeigemitteilung, die über das Senden einer Mitteilung dieses ersten Typs auf diesem Informationskanal in Kenntnis setzt, und außerdem die Kategorie dieser Mitteilung des ersten Typs angibt, diese Mobilstation auf Empfang auf diesem Informationskanal nur dann zu aktivieren, wenn diese Kategorie einer zuvor ausgewählten Kategorie entspricht.

10. Basisstation für die Durchführung der Verfahren gemäß einem der Ansprüche 1 bis 9, die zu einem digitalen zellularen Funkkommunikationssystem gehört und das Prinzip des Mehrfächzugriffs im Zeitmultiplex verwendet, wobei bei diesem System hauptsächlich folgendes eingesetzt wird:
- ein Informationskanal, der von einer oder mehreren Mobilstationen empfangen werden soll und auf dem so genannte Informationsmitteilungen gesendet werden, die für diese Mobilstationen nützliche Informationen enthalten,
- ein Signalisierungskanal, auf dem diese Mobilstationen ständig empfangsaktiv sind und auf dem insbesondere so genannte Signalisierungsmitteilungen gesendet werden, wobei die Basisstation hauptsächlich folgendes einschließt:
- Mittel zum Senden von Funksignalen, insbesondere, um diese Informationsmitteilungen auf diesem Informationskanal und diese Signalisierungsmitteilungen auf diesem Signalisierungskanal in Form von Funksignalen zu senden,
- Mittel zur Steuerung, um diese Mittel zum Senden zu steuern, damit sie vor dem Senden einer Informationsmitteilung auf diesem Signalisierungskanal in Form von Funksignalen eine Anzeigemitteilung senden, um diesen Mobilstationen den Typ der nächsten Informationsmitteilung, die gesendet werden wird, anzuzeigen,
wobei dieser Informationskanal aus einem Zeitschlitz besteht, der ebenfalls gemäß einem festgelegten Zyklus wiederholt wird, und dieser Signalisierungskanal aus einem Zeitschlitz besteht, der ebenfalls gemäß einem festgelegten Zyklus wiederholt wird, so dass einem Zeitschlitz dieses Informationskanals stets ein Zeitschlitz dieses Signalisierungskanals vorausgeht.

11. Mobilstation für die Durchführung der Verfahren gemäß einem der Ansprüche 1 bis 9, die zu einem digitalen zellularen Funkkommunikationssystem gehört und das Prinzip des Mehrfachzugriffs im Zeitmultiplex verwendet, wobei bei diesem System hauptsächlich folgendes eingesetzt wird:
- ein Informationskanal, der von einer oder mehreren Mobilslationen empfangen werden soll und auf dem so genannte Informationsmitteilungen gesendet werden, die für diese Mobilstationen nützliche Informationen enthalten,
- ein Signalisierungskanal, auf dem diese Mobilstationen ständig empfangsaktiv sind und auf dem insbesondere so genannte Signalisierungsmitteilungen gesendet werden, wobei diese Mobilstation folgendes einschließt:
- Mittel zum Empfangen von Funksignalen,
- Mittel zur Verarbeitung der empfangenen Funksignale, und insbesondere der Anzeigemitteilungen, die über das Senden einer Informationsmitteilung eines bestimmten Typs auf diesem Informationskanal in Kenntnis setzen,
- Mittel zur Steuerung der Aktivierung oder Inaktivierung dieser Mittel zum Empfang auf diesem Informationskanal in Abhängigkeit vom Typ dieser nächsten Informationsmitteilung,
wobei dieser Informationskanal aus einem Zeitschlitz besteht, der ebenfalls gemäß einem festgelegten Zyklus wiederholt wird, und dieser Signalisierungskanal aus einem Zeitschlitz besteht, der ebenfalls gemäß einem festgelegten Zyklus wiederholt wird, so dass einem Zeitschlitz dieses Informationskanals stets ein Zeitschlitz dieses Signalisierungskanals vorausgeht.

12. Mobilstation gemäß Anspruch 11, **dadurch gekennzeichnet, dass** sie außerdem Mittel einschließt, mit denen der Benutzer eine Option zur Aktivierung dieser Mittel zum Empfang in Abhängigkeit vom Typ der angezeigten Informationsmitteilung auswählt.
